# EUROPÄISCHE PATENTANMELDUNG

(11) **EP 4 640 615 A1**
(43) Veröffentlichungstag der Anmeldung: **29.10.2025**
(21) Anmeldenummer: 25169348.7
(22) Anmeldetag: 09.04.2025
(51) Int. Cl.: B66C 23/00, B25J 9/10

(54) **HEBEVORRICHTUNG ZUM MANIPULIEREN EINER LAST UND VERFAHREN ZUM MANIPULIEREN EINER LAST**

(30) Priorität: 22.04.2024 DE 102024111177
(71) Anmelder: EFS-Gesellschaft für Hebe- und Handhabungstechnik mbh, 74226 Nordheim (DE)
(72) Erfinder: Geenen, Aaron, 74193 Schwaigern (DE)
(74) Vertreter: advotec.

(57) **Zusammenfassung**

Die Erfindung betrifft eine Hebevorrichtung (01) zum Manipulieren einer Last (06), umfassend eine Mehrachskinematik (04), an der mindestens ein Manipulatorarm (02) gelagert ist, wobei der Manipulatorarm (02) um und/oder entlang mehrerer Bewegungsachsen (41, 42, 43, 44, 45) bewegbar ist und ein Haltemittel (05) für die Last (06) aufweist, wobei zumindest einer der Bewegungsachsen (41, 42, 43, 44, 45) eine auf die Mehrachskinematik (04) einwirkende Positioniereinheit (07, 08, 09, 10, 11) zur Bewegung des Manipulatorarms (02) sowie eine Gewichtskompensationseinheit (12, 13) zur Kompensation der Gewichtskraft (F_{G}) der Last (06) zugeordnet ist. Des Weiteren betrifft die Erfindung ein Verfahren zum Manipulieren einer Last mittels mindestens einer Hebevorrichtung (01).

## Beschreibung

Die vorliegende Erfindung betrifft eine Hebevorrichtung zum Manipulieren einer Last gemäß Anspruch 1 sowie ein Verfahren zum Manipulieren einer Last gemäß Anspruch 13.

Bei der Montage von Bauteilen oder Baugruppen, beispielsweise im Kraftfahrzeugbereich, müssen diese an Ort und Stelle gebracht und dort für die Montage gehandhabt werden. Insbesondere bei Bauteilen, Baugruppen oder anderen Lasten mit relativ hohem Gewicht können Hebevorrichtungen zur Entlastung des Werkers eingesetzt werden. Mit gattungsgemäßen Hebevorrichtungen, die regelmäßig auch als Hebezeuge bezeichnet sind, können Lasten manuell manipuliert und dadurch in eine gewünschte Position verbracht werden.

Bekannte Hebevorrichtungen können beispielsweise einen Manipulatorarm, der an einem zugeordneten Schwenkgelenk mit einer vertikalen Schwenkachse schwenkbar gelagert ist, umfassen, wobei der Manipulatorarm ein Haltemittel zum Halten der Last aufweist. Zur Kompensation der Gewichtskraft der Last kann der Manipulatorarm mit einem entgegen der Gewichtskraft wirkenden Kolben-Zylinder-Modul verbunden sein, sodass der Werker bei der Positionierung der Last möglichst wenig Kraft aufbringen muss. Weiter ist es beispielsweise aus der EP 2 295 209 A1 bekannt, insbesondere für die Handhabung schwerer Lasten, einen Unterstützungsantrieb zur einfachen Verschwenkung des Manipulatorarms vorzusehen, welcher vom Benutzer steuerbar ist.

Nachteilig an den bekannten Hebevorrichtungen ist es jedoch, dass das Zusammenarbeiten zwischen Werker und Hebevorrichtung, insbesondere bei großen Lasten, Risiken der Verletzung des Werkers oder der Beschädigung der Last birgt. Weiterhin muss ein bekannter, zum Verschwenken eines Manipulatorarms eingesetzter Unterstützungsantrieb eine relativ hohe Antriebskraft bzw. Antriebsenergie aufbringen.

Neben gattungsgemäßen Hebevorrichtungen, die in der Regel manuell betrieben werden, sind vollautomatisierte Anlagen, die beispielsweise mit Knickarm-Robotern ausgerüstet sind, zur Handhabung einer Last bekannt. Jedoch sind derartige vollautomatisierte Anlagen mit hohen Investitionskosten verbunden und relativ unflexibel hinsichtlich ihrer Einsatz- und Anpassungsmöglichkeiten.

Es besteht daher ein großer Bedarf an einer Hebevorrichtung und einem Verfahren zum Manipulieren einer Last, wobei die Last möglichst zuverlässig, sicher, gleichmäßig und mit minimalem Energieverbrauch bewegt werden soll. Zudem sollte die Hebevorrichtung flexibel, möglichst universell einsetzbar sein und an unterschiedliche Aufgaben- bzw. Problemstellungen anpassbar sein. Weiter sollte die Hebevorrichtung kostengünstig herstellbar und betreibbar sein sowie das Verfahren kostengünstig durchführbar sein, wobei ein weiteres Augenmerk darauf liegt, die Hebevorrichtung möglichst kompakt und platzsparend auszugestalten. Des Weiteren sollte zwingend der Schutz des die Hebevorrichtung bedienenden Werkers gewährleistet werden und zudem eine Einbindung, im Sinne einer Nachrüstung, in bereits vorhandene Schutzeinrichtungen ermöglicht werden.

Die Erfindung hat es sich daher zur Aufgabe gemacht, eine solche Hebevorrichtung und ein solches Verfahren bereitzustellen und dabei die Nachteile aus dem Stand der Technik bei gleichzeitig möglichst geringem Energiebedarf zu überwinden.

Diese Aufgabe wird auf überraschend einfache aber wirkungsvolle Art und Weise von einer Hebevorrichtung zum Manipulieren einer Last nach der Lehre des unabhängigen Anspruchs 1 und einem Verfahren zum Manipulieren einer Last nach der Lehre des Anspruchs 13 gelöst.

In einem ersten Aspekt betrifft die Erfindung eine Hebevorrichtung zum Manipulieren einer Last, umfassend eine Mehrachskinematik, an der mindestens ein Manipulatorarm gelagert ist. Der Manipulatorarm weist ein Haltemittel für die Last auf und kann mittels der Mehrachskinematik um mehrere Bewegungsachsen und/oder entlang mehrerer Bewegungsachsen bewegt werden. So kann die Last beispielsweise entlang einer Bewegungsachse linear bewegt werden und/oder um eine Bewegungsachse verschwenkt werden.

Eine Mehrachskinematik betrifft im Rahmen der Erfindung eine Kinematik, die mehrere zueinander bewegliche Glieder aufweist, welche durch Gelenke rotatorisch oder translatorisch zueinander bewegt werden können. Den Gelenken kann ein Antrieb und/oder Aktor zugewiesen sein. Die erfindungsgemäße Mehrachskinematik kann den Manipulatorarm umfassen. Das heißt, dass der Manipulatorarm Teil der Mehrachskinematik sein kann.

Die erfindungsgemäße Hebevorrichtung ist dadurch gekennzeichnet, dass zumindest einer der Bewegungsachsen eine auf die Kinematik einwirkende Positioniereinheit zur Bewegung des Manipulatorarms sowie eine Gewichtskompensationseinheit zugeordnet ist. Das heißt mit anderen Worten, dass jeder Bewegungsachse, beispielsweise einer Translationsachse und/oder einer Rotationsachse, entlang der und/oder um die eine Bewegung des Manipulatorarms gewünscht ist, eine Positioniereinheit und eine Gewichtskompensationseinheit zugeordnet sind. Somit lässt sich unter Minimierung der Antriebsenergie der für die jeweilige Bewegungsachse vorgesehenen Positioniereinheit eine Linearbewegung und/oder eine Verschwenkung des Manipulatorarms erzielen. Denn mittels der ebenfalls der jeweiligen Bewegungsachse zugeordneten Gewichtskompensationseinheit können die an dieser Bewegungsachse auftretenden, durch die Last hervorgerufenen Gewichtskräfte dynamisch kompensiert werden, sodass die der jeweiligen Positioniereinheit zugeführte Antriebsenergie für die einzelne Bewegungsachse wesentlich reduziert werden kann. Das heißt, dass aufgrund der Gewichtskompensation mittels der Gewichtskompensationseinheit einer Bewegung des Manipulatorarms um eine und/oder entlang einer Bewegungsachse lediglich eine minimale oder keine Gewichtskraft entgegensteht, sodass eine Bewegung des Manipulatorarms zum Manipulieren der Last mittels der Positioniereinheit mit möglichst geringer Antriebsenergie erfolgen kann. Dies lässt zum einen eine energieeffiziente und flexible Handhabung der Last zu, während gleichzeitig eine erhöhte Sicherheit für den Werker gegeben ist, da die Last auch im Fehlerfall nur durch geringe Kräfte und Momente bewegt wird und somit durch die Last keine oder nur geringfügige Schäden bewirkt werden können. Weiter kann die Sicherheit für das Bedienpersonal dadurch erhöht werden, dass die erfindungsgemäße Hebevorrichtung in einfacher Art und Weise in etablierte Schutzeinrichtungen integriert werden kann. Die erfindungsgemäße Anordnung vereint daher die Vorteile bekannter Hebevorrichtungen zum manuellen Manipulieren einer Last mit der Möglichkeit zur zielgerichteten und definierten Unterstützung des Werkers bei der Bewegung des Manipulatorarms um mehrere und/oder entlang mehrerer Bewegungsachsen aufgrund der Mehrachskinematik und der Positioniereinheit.

Die Positioniereinheit weist zumindest einen Positionieraktor auf, der zur Positionierung der Last mit Antriebsenergie versorgt wird. Die Gewichtskompensationseinheit weist zumindest einen Gewichtskompensationsaktor auf, der zur Kompensation der Gewichtskraft der Last mit Antriebsenergie versorgt wird. Der Begriff "Aktor" betrifft im Rahmen der Erfindung eine Antriebseinheit, die ein elektrisches Signal in mechanische Bewegungen umsetzt.

Das Manipulieren der Last kann bevorzugt manuell oder halbautomatisiert erfolgen. Beim halbautomatisierten Manipulieren der Last erfolgt eine teilweise Unterstützung des Werkers durch Automatisierung, jedoch wird keine vollständige Autonomie des Prozessablaufs erreicht, wodurch Investitionskosten und Planungsaufwand eingespart und die Flexibilität erhöht werden können. Es ist jedoch auch denkbar, dass die Manipulation der Last mittels der erfindungsgemäßen Hebevorrichtung vollautomatisiert erfolgt, wobei eine vollständige Autonomie des Prozessablaufs bzw. eine vollständige Entlastung des Werkers erreicht wird und dem Werker lediglich eine überwachende Funktion zukommt.

Zudem ist es denkbar, dass bekannte gattungsgemäße Hebevorrichtungen zu einer erfindungsgemäßen Hebevorrichtung nachgerüstet werden. Die erfindungsgemäße Ausgestaltung der Hebevorrichtung ermöglicht ein derartiges Nachrüsten mit relativ geringem Investitionsaufwand.

Weiter hat es sich im Rahmen der Erfindung als vorteilhaft erwiesen, dass je Bewegungsachse eine Gewichtskompensationseinheit sowie eine Positioniereinheit vorgesehen ist, da somit eine flexible Anpassung der Hebevorrichtung an die zu manipulierende Last sowie die Bewegungsabläufe zur Positionierung der Last gegeben ist.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass die zu der Hebevorrichtung gemachten Ausführungen sich in äquivalenter Weise auf das erfindungsgemäße Verfahren beziehen, ohne für dieses separat genannt zu werden. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Die Gewichtskompensationseinheit und/oder die Positioniereinheit kann elektrisch und/oder pneumatisch antreibbar sein. Mit anderen Worten kann die Gewichtskompensationseinheit und/oder die Positioniereinheit einen elektrischen und/oder einen pneumatischen Antrieb aufweisen. Bevorzugt kann die Gewichtskompensationseinheit einen Gewichtskompensationsaktor aufweisen, der pneumatisch antreibbar ist. Weiter bevorzugt ist ein Positionieraktor der Positioniereinheit elektrisch antreibbar. Gemäß einer bevorzugten Ausführungsform kann die Kompensation der Gewichtskraft der Last mittels pneumatischer Energie und die Positionierung der Last mittels elektrischer Energie erfolgen, wodurch eine energieeffiziente Lastkompensation sowie eine hohe Genauigkeit bei der Positionierung erzielt werden. Insbesondere kann die Positioniereinheit durch einen positionsgeregelten Antrieb angetrieben werden.

Der elektrische und/oder pneumatische Antrieb der Gewichtskompensationseinheit und/oder der Positioniereinheit kann derart ausgebildet sein, dass der Antrieb den Anforderungen der kollaborativen Robotik genügt. Die Hebevorrichtung ist dadurch vorteilhafterweise geeignet, im gleichen Arbeitsraum zeitgleich mit einem menschlichen Bediener zu arbeiten. Insbesondere können die Sicherheitsanforderungen der kollaborativen Robotik mittels des Antriebs der Gewichtskompensationseinheit und/oder der Positioniereinheit erfüllt sein. So kann die Hebevorrichtung vorteilhafterweise in unmittelbarer Nähe zum menschlichen Bediener eingesetzt werden, mit dem menschlichen Bediener interagieren, und Verletzungen beim menschlichen Bediener können ausgeschlossen werden. Der Arbeitsraum der Hebevorrichtung kann beispielsweise über Sensoren der Hebevorrichtung oder externe Sensoren überwacht werden, sodass auf eine bauliche Sicherheitseinrichtung zur Abgrenzung der Hebevorrichtung gegenüber dem menschlichen Bediener verzichtet werden kann, da die Hebevorrichtung in gefährlichen Situationen aufgrund der sensorischen Überwachung automatisch abgeschaltet werden kann.

Gemäß einer bevorzugten Ausführungsform der Erfindung kann die Hebevorrichtung eine Regelungseinrichtung umfassen, die dazu ausgebildet ist, die Bewegung des Manipulatorarms in Abhängigkeit der Gewichtskraft der Last und/oder der Position der Last und/oder der Bewegungsbahn des Manipulatorarms zu regeln. Die Formulierung "Bewegungsbahn des Manipulatorarms" betrifft im Rahmen der Erfindung den zur Positionierung der Last notwendigen Bewegungsablauf des Manipulatorarms, insbesondere das Anfahren einer Mehrzahl an Positionen im Arbeitsraum über die Zeit. Es ist denkbar, dass die Regelungseinrichtung einen Steuerungsdatensatz zur Bewegung des Manipulatorarms in Abhängigkeit der Gewichtskraft der Last und/oder der Position der Last erstellt und mittels des Steuerungsdatensatzes die Gewichtskompensationseinheit und/oder die Positioniereinheit gesteuert werden kann. Ein Steuerungsdatensatz kann neben Steuerbefehlen zur Ansteuerung einer Gewichtskompensationseinheit und/oder einer Positioniereinheit auch Informationen zur Bewegungsbahn, also dem zur Positionierung der Last notwendigen Bewegungsablauf des Manipulatorarms, enthalten. Besonders vorteilhaft sind die Positioniereinheit und die Gewichtskompensationseinheit über die Regelungseinrichtung schaltungstechnisch miteinander verbunden, sodass der Gewichtskompensationsaktor und der Positionieraktor in Abhängigkeit voneinander gesteuert werden können. Dies ermöglicht insbesondere, dass die Antriebsenergie des Positionieraktors zum Bewegen der Last stetig optimiert, bevorzugt stetig gering gehalten, werden kann, da bei erhöhter Zufuhr von Antriebsenergie zum Positionieraktor der Gewichtskompensationsaktor derart nachgeregelt werden kann, dass der Positionieraktor entlastet wird.

Im Rahmen der Erfindung wurde es vorteilhafterweise erkannt, dass sich die Gewichtskraft der Last, die mittels der Gewichtskompensationseinheit kompensiert werden soll, in Abhängigkeit des Bewegungsablaufs des Manipulatorarms und/oder der Position der Last dynamisch verändert. Diese dynamische Veränderung der zu kompensierenden Gewichtskraft entsteht aufgrund der Bewegung der Last. Gemäß einer bevorzugten Ausführungsform kann die Gewichtskompensationseinheit, insbesondere ein Gewichtskompensationsaktor, mittels der Regelungseinrichtung dynamisch angesteuert werden, um eine dynamische Kompensation der Gewichtskraft der Last zu ermöglichen. Das heißt mit anderen Worten, dass je nach Position der Last und/oder Bewegungsablauf des Manipulatorarms die Kraftaufbringung der Gewichtskompensationseinheit angepasst werden kann, um den Positionieraktor der Positioniereinheit unabhängig von der Position der Last und/oder dem Bewegungsablauf des Manipulatorarms mit möglichst geringer Energie betreiben zu können.

Die Hebevorrichtung kann eine Positionssensorik, eine Geschwindigkeitssensorik, eine Beschleunigungssensorik, eine Zeitsensorik, eine Wegsensorik und/oder eine Gewichtssensorik umfassen. Die von den genannten Sensoriken erfassten Daten können an die Regelungseinrichtung übermittelt werden und von der Regelungseinrichtung zur Erstellung eines Steuerungsdatensatzes für die Gewichtskompensationseinheit und/oder die Positioniereinheit verwendet werden. Das heißt mit anderen Worten, dass die Regelungseinrichtung einen Steuerungsdatensatz in Abhängigkeit der von den genannten Sensoriken ermittelten Daten erstellen kann. Die Positionssensorik ist zur Erfassung der Position der Last im Raum gegenüber einem, bevorzugt an der Hebevorrichtung angeordneten, Nullpunkt ausgebildet. Mittels der Geschwindigkeitssensorik kann die Geschwindigkeit, mit der die Last bewegt wird, erfasst werden. Die Beschleunigungssensorik dient der Erfassung der Beschleunigung der Last bei einer Bewegung der Last. Mittels der Zeitsensorik kann die Zeitspanne, die für einen bestimmten Bewegungsablauf bei der Bewegung der Last benötigt wird, erfasst werden. Die Wegsensorik dient der Erfassung einer zurückgelegten Strecke der Last. Somit ist es möglich, durch die Kombination einer Zeitsensorik und einer Wegsensorik ein sogenanntes Zeit-Weg-Diagramm für bestimmte Bewegungsabläufe der Last zu erstellen. Es ist jedoch auch denkbar, dass zur Erfassung des von der Last zurückgelegten Wegs über die Zeit eine Geschwindigkeitssensorik genutzt wird, da diese zur Erfassung einer definierten Strecke pro Zeit ausgelegt sein kann. Mittels der Gewichtssensorik kann das Gewicht der am Haltemittel des Manipulatorarms angeordneten Last ermittelt werden. Bei unbekanntem Gewicht der Last kann die Gewichtskompensationseinheit in Abhängigkeit der Daten der Gewichtssensorik zur Kompensation der Gewichtskraft der Last angesteuert werden, um die Gewichtskraft der Last effektiv und definiert zu kompensieren.

Um die Sicherheit des Werkers zu gewährleisten und eine Beschädigung der Last zu vermeiden, ist die Gewichtskompensationseinheit derart ausgebildet, dass ein Energieabfall oder eine Unterbrechung der Energieversorgung der Gewichtskompensationseinheit die Last in ihrer aktuellen Lage verharren lässt und es zu keinem ungewollten Absturz der Last kommen kann. Insbesondere, wenn die Gewichtskompensationseinheit ein pneumatisch beaufschlagbares Kolben-Zylinder-Modul umfasst, kann der Zylinder bei Unterbrechung der Energiezufuhr, beispielsweise aufgrund eines Schlauchbruchs und des damit verbundenen Druckabfalls, in der aktuellen Hubstellung gehalten werden, um ein Abstürzen der Last zu verhindern. Hierzu kann die Gewichtskompensationseinheit eine Absturzsicherung aufweisen. Bevorzugt kann die Absturzsicherung ein Ventil aufweisen, das in der zum Kolben-Zylinder-Modul führenden Pneumatikleitung sitzt und so geschaltet ist, dass beim Auf- und Abwärtshub das Druckmittel frei passieren kann, während es bei einem Energieabfall oder Energieausfall in die Geschlossenstellung springt. In der Geschlossenstellung wird der Abfluss des Pneumatikmittels, in der Regel der Druckluft, aus dem Kolben-Zylinder-Modul heraus blockiert, und die Last verharrt in der aktuellen Hubposition. Somit kann mittels der Absturzsicherung gewährleistet werden, dass die angefahrene Hubposition bei Versagen des Systems oder bei einem Energieausfall aufrechterhalten wird und ein Herabfallen der Last vermieden wird. Das Ventil der Absturzsicherung sperrt bei Energieausfall selbsttätig und verhindert somit, dass Pneumatikmittel aus dem Kolben-Zylinder-Modul ausströmt. Alternativ oder zusätzlich ist es denkbar, dass das Ventil der Absturzsicherung eine Blende aufweist, deren Öffnungsquerschnitt auf die gewünschte maximale Senkgeschwindigkeit der Last abgestimmt ist. Mit anderen Worten drosselt die Blende die Strömung des Pneumatikmittels derart, dass bei unterbrochener Energieversorgung die maximale Senkgeschwindigkeit der Last begrenzt ist. Dadurch kann die Last bei Energieabfall sanft abgesenkt werden.

Die Mehrachskinematik der erfindungsgemäßen Hebevorrichtung kann ein dem Manipulatorarm zugeordnetes Schwenkgelenk mit einer vertikalen Schwenkachse aufweisen, wobei der Manipulatorarm um die vertikale Schwenkachse schwenkbar ist, und wobei der Manipulatorarm mittels des zugeordneten Schwenkgelenks ortsfest, insbesondere an einem Tragelement, gelagert sein kann. Die ortsfeste Lagerung stellt sicher, dass die Schwenkachse des zugeordneten Schwenkgelenks vertikal ausgerichtet bleibt und daher dauerhaft frei von äußeren, um die Schwenkachse wirkenden Gewichtskraftmomenten ist. Hierdurch ist sichergestellt, dass die Handkraft des Werkers und/oder die Kraft der Positioniereinheit im Wesentlichen nur die Trägheitskräfte der Last beim Beschleunigen bzw. Verzögern aufbringen muss, ohne eine Hubarbeit gegen die Erdanziehungskraft zu leisten. Hierdurch ist die Anordnung leichtgängig und energieeffizient steuerbar. Ein Tragelement kann beispielsweise eine am Untergrund verankerbare Tragsäule oder ein Deckenträger oder eine längs einer Deckenschiene verfahrbare Laufkatze oder ein Wandträger sein. Als vorteilhaft hat es sich zudem erwiesen, wenn der Manipulatorarm ohne Drehwinkelbegrenzung um das Schwenkgelenk schwenkbar ist. Dies erlaubt die Erreichbarkeit sämtlicher Positionierorte, die innerhalb des Radius des Manipulatorarms liegen.

Der Manipulatorarm der Hebevorrichtung kann durch in Gewichtskraftrichtung übereinander angeordnete vertikal verschwenkbare Parallelogrammarme gebildet sein. Hierdurch ist sichergestellt, dass die außenseitig sich daran anschließenden Baugruppen einschließlich eines oder mehrerer weiterer Schwenkgelenke bei einer Höhenverstellung keine Kippbewegung durchführen. Die vertikale Schwenkachse eines äußeren Schwenkgelenks bleibt vertikal und damit frei von äußeren Gewichtskraftmomenten.

Im Bereich des Haltemittels für die Last kann ein durch den Werker betätigbares Steuermodul angeordnet sein. Durch die vorteilhafte Anordnung des Steuermoduls kann der Werker weiterhin im Bereich der Haltemittel für die Last stehen und diese manuell und/oder halbautomatisiert in die gewünschte Lage und Position manipulieren. Gleichzeitig hat er auch direkten Zugriff auf das Steuermodul, mittels dessen der Werker die Manipulation der Last, insbesondere die Positioniereinheit und/oder die Gewichtskompensationseinheit, steuern kann. Der Werker kann somit die Hebevorrichtung steuern und gleichzeitig direkten Kontakt zur Last behalten, wodurch er deren Lage und Position, falls erforderlich oder gewünscht, auch durch Handkraft manuell korrigieren bzw. anpassen kann. Es ist auch denkbar, dass das Steuermodul derart drahtlos oder kabelgebunden ausgeführt ist, dass sich der Werker mit dem Steuermodul zumindest innerhalb des Arbeitsbereichs und um den Arbeitsbereich der Hebevorrichtung bewegen kann.

Die Hebevorrichtung kann eine Führungseinrichtung umfassen, die eine Verschiebung der Gewichtskompensationseinheit quer zur Längsachse der Gewichtskompensationseinheit erlaubt. Insbesondere kann die Führungseinrichtung eine Verschiebung des Kolben-Zylinder-Moduls der Gewichtskompensationseinheit quer zur Zylinderachse des Kolben-Zylinder-Moduls erlauben. Die Führungseinrichtung kann zumindest eine, bevorzugt zumindest zwei, Rollen aufweisen. Das gewichtskompensierende Kolben-Zylinder-Modul kann einerseits gelenkig mit der Mehrachskinematik verbunden und sich anderseits an der Mehrachskinematik oder einem Tragelement der Hebevorrichtung abstützen, sodass das Kolben-Zylinder-Modul von selbst der Funktion der Wirklinienabstandsänderung der Last bei einer Hubbewegung folgen kann. Sofern vorteilhafterweise mehr als eine Rolle von der Führungseinrichtung umfasst ist, können Störungen, beispielsweise durch Verschmutzung, sowie eine Schrägstellung des Zylinders wirkungsvoll vermieden werden. Vorteilhafterweise kann sich somit durch die vorgeschlagene Führungseinrichtung der Wirkabstand zu einer parallel durch eine Schwenkachse des Manipulatorarms verlaufenden Achsparallelen ändern. Vorteilhafterweise kann das Kolben-Zylinder-Modul in der Führungseinrichtung zwischen einem Lastende des Manipulatorarms und/oder einem Element der Mehrachskinematik und der Schwenkachse des Manipulatorarms oder des Elements der Mehrachskinematik verschiebbar festgelegt sein. Alternativ oder zusätzlich ist es denkbar, dass das Kolben-Zylinder-Modul entlang des Tragelements der Hebevorrichtung mittels der Führungseinrichtung verschiebbar gelagert ist.

In vorteilhafter Weiterbildung ist das Haltemittel für die Last an einem freien Ende des Manipulatorarms mittels eines Vertikalarms und eines zusätzlichen Schwenkgelenks mit vertikaler Schwenkachse befestigt, wobei das Haltemittel durch Handkraft und/oder durch eine Positioniereinheit frei, insbesondere mit einer Drehwinkelbegrenzung, um dieses zusätzliche Schwenkgelenk schwenkbar ist. Das Haltemittel und die daran gehaltene Last liegen zentrisch unter dem zusätzlichen Schwenkgelenk, sodass eine Verschwenkung um dieses zusätzliche Schwenkgelenk zu keiner nennenswerten lateralen Beschleunigung bzw. Verzögerung der Last führt. Bei einer Schwenkbewegung sind hier vorrangig nur die rotatorischen Massenträgheitsmomente zu überwinden, was jedoch selbst bei schwereren Lasten durch Handkraft und/oder eine energieeffizient betreibbare Positioniereinheit geschehen kann. Eine optional vorsehbare Drehwinkelbegrenzung kann ein Verdrillen einer Pneumatikleitung, einer elektrischen Versorgungs- und Steuerleitung oder einer anderen Leitung infolge eines übermäßigen Schwenkwinkels vermeiden.

Es ist denkbar, dass zwei Manipulatorarme vorgesehen sind, wobei der zweite Manipulatorarm mittels eines zugeordneten Schwenkgelenks an einem freien Ende des ersten Manipulatorarms gelagert und dabei insbesondere mit einer Drehwinkelbegrenzung um das zugeordnete Schwenkgelenk schwenkbar ist. Es entsteht damit die Möglichkeit zweier überlagerter Schwenkbewegungen, mittels derer der Werker auch translatorische Bewegungen der Last herbeiführen und dabei sämtliche Positionen innerhalb des Radius der Hebevorrichtung anfahren kann. Die Drehwinkelbegrenzung verhindert eine Kollision des zweiten Manipulatorarms bzw. der daran gehaltenen Last, beispielsweise mit einem Tragelement. Außerdem wird vermieden, dass sich Pneumatikleitungen, elektrische Versorgungs- und Steuerleitungen oder andere Leitungen infolge eines übermäßigen Schwenkwinkels verdrillen.

In einem zweiten Aspekt betrifft die Erfindung ein Verfahren zum Manipulieren einer Last mittels mindestens einer Hebevorrichtung, umfassend die folgenden Schritte:
- Festlegen der Last an einem Haltemittel,
- Heben und/oder Halten der Last zumindest mittels einer Gewichtskompensationseinheit,
- Positionieren der Last mittels Handkraft und/oder einer Positioniereinheit,
wobei das Positionieren der Last um zumindest eine Bewegungsachse und/oder entlang zumindest einer Bewegungsachse durch eine der zumindest einen Bewegungsachse zugeordnete Positioniereinheit und eine der zumindest einen Bewegungsachse zugeordnete Gewichtskompensationseinheit unterstützt wird.

Somit kann mit dem erfindungsgemäßen Verfahren vorteilhafterweise durch die Trennung von Gewichtskompensation und Positionierung die zu positionierende Last mit minimaler Antriebsenergie je einzelner Bewegungsachse positioniert werden. Die Zuordnung zumindest einer Positioniereinheit und zumindest einer Gewichtskompensationseinheit je Bewegungsachse ermöglicht neben der sicheren Zusammenarbeit von Werker und Hebevorrichtung die Entlastung des Werkers sowie eine einfache und feinfühlige Positionierung auch schwerer Lasten. Bevorzugt kann das erfindungsgemäße Verfahren zur Manipulation einer Last mit der erfindungsgemäßen Hebevorrichtung eingesetzt bzw. kann mit der erfindungsgemäßen Hebevorrichtung das erfindungsgemäße Verfahren ausgeführt werden.

Die Gewichtskompensationseinheit kann derart geregelt werden, dass zum Positionieren der Last mittels der Positioniereinheit nur relativ geringe Antriebskräfte aufgebracht werden. Die mittels der Positioniereinheit aufgebrachten Antriebskräfte können derart gering sein, dass ein Personenschaden zuverlässig minimiert und/oder ausgeschlossen wird. Die Minimierung der Antriebskräfte der Positioniereinheit wird ermöglicht, da die Wirkung der Gewichtskraft weitestgehend mittels der Gewichtskompensationseinheit kompensiert wird. Zudem kann somit vorteilhafterweise die Anzahl der notwendigen Antriebe zum Positionieren der Last herabgesetzt werden. Die von einer Positioniereinheit aufzubringende Antriebskraft kann aufgrund der Regelung der Gewichtskompensationseinheit vorteilhafterweise 5 % bis 20 % gegenüber einer von einer Positioniereinheit einer Hebevorrichtung ohne Gewichtskompensationseinheit aufzubringenden Antriebskraft betragen. Mit anderen Worten kann die von der Positioniereinheit aufzubringende Antriebskraft um 80 % bis 95 % reduziert werden. Bevorzugt kann die von einer Positioniereinheit aufzubringende Antriebskraft aufgrund der Regelung der Gewichtskompensationseinheit vorteilhafterweise 8 % bis 15 %, insbesondere 10 %, gegenüber einer von einer Positioniereinheit einer Hebevorrichtung ohne Gewichtskompensationseinheit aufzubringenden Antriebskraft betragen.

Die Gewichtskompensationseinheit kann, insbesondere in Abhängigkeit der Position der Last, derart geregelt werden, dass die zur Positionierung der Last aufzubringende Kraft unabhängig von der Gewichtskraft und der Position der Last konstant bleibt. Das heißt mit anderen Worten, dass, sofern die Positionierung allein über die Positioniereinheit erfolgt, die Positioniereinheit unabhängig von der Gewichtskraft und der Position der Last im Raum nur eine konstante, minimale Kraft aufbringen muss. Vorteilhafterweise kann, sollte sich die von der Positioniereinheit aufgrund der Bewegung und/oder Position der Last im Raum aufzubringende Kraft erhöhen, die Gewichtskompensationseinheit derart nachgeregelt werden, dass die von der Positioniereinheit aufzubringende Kraft wieder unter einen gewünschten Schwellenwert fällt.

Ist die Gewichtskraft der Last bekannt, kann das Heben der Last mit einer höheren Geschwindigkeit als das anschließende Positionieren der Last erfolgen. Somit kann in vorteilhafter Weise durch ein schnelleres Anfahren der Last auf eine Vorab-Position die Taktzeit des Positionierprozesses gesenkt werden. Die Vorab-Position ist eine Position im Raum, die zumindest in der Nähe der Zielposition der Last, an die die Last verbracht werden soll, liegt. Sofern ein schnelles Anfahren auf die Vorab-Position der Last erfolgt, ist daher für das Positionieren der Last, das regelmäßig mit einer geringeren Geschwindigkeit erfolgt, lediglich ein geringer Weg zurückzulegen, wodurch die zur Positionierung der Last erforderliche Gesamtzeit reduziert werden kann.

Gemäß einer bevorzugten Ausführungsform des Verfahrens kann die Gewichtskraft der Last ermittelt werden und ein Steuerungsdatensatz zur Steuerung der Positioniereinheit und/oder der Gewichtskompensationseinheit in Abhängigkeit der Gewichtskraft der Last erstellt werden. Insbesondere bei unbekanntem Gewicht der Last ist es vorteilhaft, dass die Gewichtskraft der Last, beispielsweise mit einer geeigneten Sensorik, ermittelt wird. Alternativ oder zusätzlich ist es denkbar, dass bei bekanntem Gewicht der Last die Gewichtsdaten zur Erstellung eines Steuerungsdatensatzes zur Steuerung der Positioniereinheit und/oder der Gewichtskompensationseinheit in Abhängigkeit der Gewichtskraft der Last genutzt werden. Die Gewichtsdaten können alternativ oder zusätzlich zu einer sensorischen Erfassung über ein Steuermodul durch den zuständigen Werker eingegeben und in der Regelungseinrichtung verarbeitet werden.

Mittels einer zuvor bereits beschriebenen Positionssensorik, einer Geschwindigkeitssensorik, einer Beschleunigungssensorik, einer Zeitsensorik, einer Wegsensorik und einer Gewichtssensorik können Messwerte erfasst werden. Diese Messwerte können in einer Datenbank gespeichert werden, und/oder es kann ein Steuerungsdatensatz in Abhängigkeit der erfassten Messwerte erstellt werden. Bevorzugt kann ein Steuerungsdatensatz in Abhängigkeit der Messwerte einer Gewichtssensorik, einer Zeitsensorik und/oder einer Wegsensorik erstellt werden, wobei die durch die Gewichtskompensationseinheit aufgebrachte Kraft auf die Position der Last im Raum und/oder die Beschleunigung der Last angepasst wird, um die von der Positioniereinheit aufzubringende Kraft möglichst gering zu halten. Eine Datenbank umfasst bevorzugt zumindest ein computerlesbares Speichermedium.

Gemäß einer vorteilhaften Ausführungsform des erfindungsgemäßen Verfahrens können Steuerungsdatensätze und Messwerte in einer Datenbank verknüpft gespeichert werden, wobei ein statistisches Modell anhand der gespeicherten Messwerte und Steuerungsdatensätze erstellt werden kann, und wobei ein neuer Steuerungsdatensatz durch Inferenz mit dem statistischen Modell ermittelt werden kann. Die verknüpfte Speicherung der Steuerungsdatensätze und Messwerte in einer Datenbank und/oder die Erstellung eines statistischen Modells anhand der gespeicherten Messwerte und Steuerungsdatensätze und/oder die Ermittlung eines neuen Steuerungsdatensatzes durch Inferenz mit dem statistischen Modell kann mittels des Steuermoduls, das eine Recheneinheit aufweisen kann, oder eines Zentralrechners, der als Computer ausgebildet sein kann, erfolgen. Das Steuermodul kann im Arbeitsraum der Hebevorrichtung angeordnet sein. Der Zentralrechner kann außerhalb des Arbeitsraums der Hebevorrichtung angeordnet sein. Es ist denkbar, dass der Zentralrechner Daten mehrerer Hebevorrichtungen verarbeitet und Steuerungsdatensätze für eine Mehrzahl an Hebevorrichtungen erstellt und ausgibt. Anhand des statistischen Modells können statistische Zusammenhänge zwischen den Steuerungsdatensätzen und dem Gewicht der Last erkannt werden. Mit anderen Worten kann das statistische Modell mithilfe der aufgenommenen Messwerte und der gespeicherten Steuerungsdatensätze, die auch als Trainingsdatensätze bezeichnet werden können, trainiert werden. Bevorzugt handelt es sich bei dem Trainieren um überwachtes Lernen, unüberwachtes Lernen oder bestärkendes Lernen. Besonders bevorzugt ist das statistische Modell ein künstliches neuronales Netzwerk, insbesondere ein rekurrentes neuronales Netzwerk (RNN), ein Feedforward neuronales Netzwerk (FNN), ein faltendes neuronales Netzwerk (Convolutional Neural Network - CNN), ein Transformer, ein flussbasiertes generatives Modell (Flow Based Generative Model), ein entwickeltes neuronales Netzwerk (Evolving Neural Network), ein Codierer-Decodierer-Modell (Encoder-Decoder-Model), ein Variational Autoencoder, ein autoregressives Modell (ARMA-Modell), eine beschränkte Boltzmannmaschine (Restricted Boltzmann Machine - RBM) und/oder ein Diffusionsmodell (Diffusion Model), ein verdecktes Markovmodell (Hidden Markov-Model - HMM) und/oder eine Support-Vector-Machine (SVM). Des Weiteren ist es denkbar, die Methoden des Genetic Programming, des Boostings, des Decision-Tree-Machine-Learnings, der Kerndichteschätzung (Kernel Density Estimation - KDE), des Expertensystems (Expert Systems - ES), eines (naiven) Bayes- Klassifikators, des Gradient-Boostings, der linearen Diskriminanzanalyse (Linear Discriminant Analysis), der Nächsten-Nachbarn-Klassifikation (Nearest Neighbour Classificator), eines Cluster-Analyse-Verfahrens, insbesondere des Single-Linkage-Verfahrens, des Complete-Linkage-Verfahrens, des Ward-Verfahrens, des K-Means-Algorithmus, des Fuzzy-C-Means-Algorithmus, des Erwartungs-Maximierungs-Algorithmus (EM-Algorithmus), des DBSAN (Density-Based Spatial Clustering of Applications with Noise), des STING-Algorithmus (Statistical Information Grid-based Clustering-Algorithmus) und/oder des CLIQUE-Algorithmus (Clustering Inquest-Algorithmus), und/oder eines Verfahrens der Anomaliedetektion, insbesondere des Local-Outlier-Factor (LOF), des Isolation Forest und/oder des Autoencoders, und/oder der Hauptkomponentenanalyse (Principal Component Analysis - PCA) einzusetzen. Weiter können Verfahren des bestärkenden Lernens (Reinforcement Learning) verwendet werden, wie assoziiertes bestärkendes Lernen (Associative Reinforced Learning), tiefes bestärkendes Lernen (Deep Reinforcement Learning), gegensätzliches tiefes bestärkendes Lernen (Adversarial Deep Reinforcement Learning), unscharfes bestärkendes Lernen (Fuzzy Reinforcement Learning) und/oder sicheres bestärkendes Lernen (Safe Reinforcement Learning). Insbesondere ist es denkbar, dass ebenfalls Verfahren zur Clusterbildung von Daten verwendet werden.

Die Steuerungsdatensätze und Messwerte können in einer zentralen Datenbank gespeichert werden, wobei die Datenbank im Betrieb der erfindungsgemäßen Hebevorrichtung und/oder bei Verwendung des erfindungsgemäßen Verfahrens durch neue Steuerungsdatensätze und Messwerte stetig erweitert wird. Anhand der in der Datenbank gespeicherten Messwerte und Steuerungsdatensätze kann ein neuer Steuerungsdatensatz durch Inferenz mit dem statistischen Modell ermittelt werden. Dabei betrifft der Begriff "Inferenz" das Ableiten mindestens eines neuen Steuerungsdatensatzes anhand des mit den Messwerten und den bereits bekannten Steuerungsdatensätzen erstellten statistischen Modells. Mittels der Weiterbildung des Verfahrens ist es somit möglich, auf schnelle und einfache Weise Steuerungsdatensätze zur Manipulation einer Last zu erstellen oder zumindest einem Werker vorzuschlagen. Somit kann durch einen selbstlernenden Prozess das Wiegen und/oder das Bewegen der Last in eine gewünschte Position optimiert werden.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf das erfindungsgemäße Verfahren beziehen, ohne für dieses separat genannt zu werden.

Ausführungsformen der Erfindung sind in den Zeichnungen schematisiert dargestellt und werden nachfolgend beispielhaft erläutert.

Es zeigen:
- **Fig. 1**: ein erstes schematisches Ausführungsbeispiel einer erfindungsgemäßen Hebevorrichtung; und
- **Fig. 2**: ein zweites schematisches Ausführungsbeispiel einer erfindungsgemäßen Hebevorrichtung.

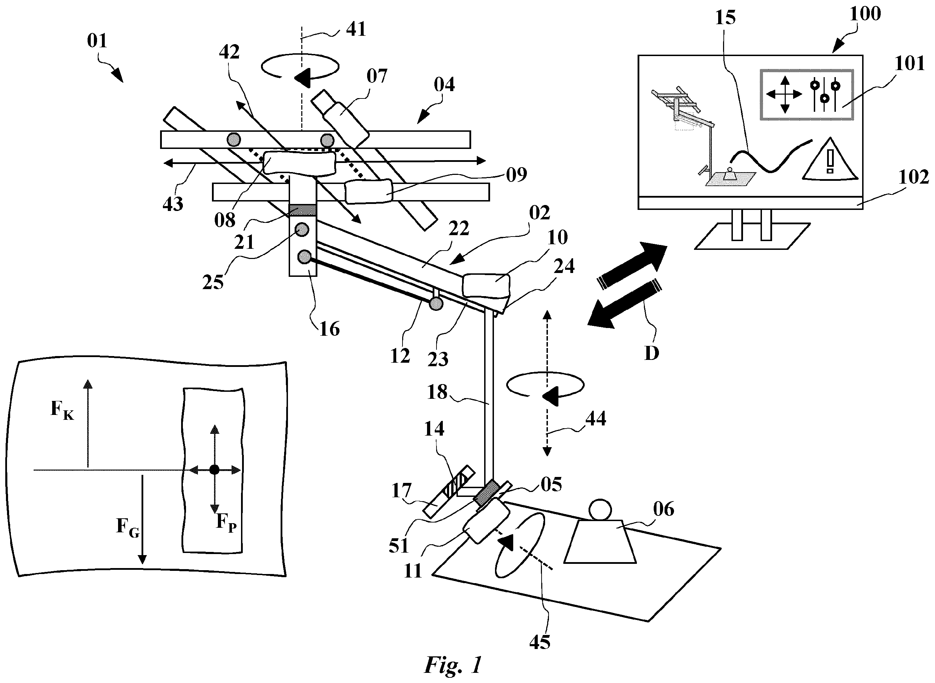

Die **Fig. 1** zeigt eine vereinfacht dargestellte Hebevorrichtung 01, welche eine Mehrachskinematik 04 mit einem Manipulatorarm 02 aufweist. Am freien Ende 24 des Manipulatorarms 02 ist ein Vertikalarm 18 angeordnet, an dessen freiem Ende wiederum ein Haltemittel 05 zur Aufnahme der Last 06 angeordnet ist. Der Manipulatorarm 02 ist mittels eines zugeordneten Schwenkgelenks 21 ortsfest an einem Tragelement 16 gelagert. Als vertikales Tragelement 16 ist vorliegend ein Tragelement vorgesehen, das an der Decke oder einer Deckenschiene fest verankert werden kann und in Gewichtskraftrichtung F_{G} ausgerichtet ist. Das Schwenkgelenk 21 weist eine vertikale, ebenfalls in Gewichtskraftrichtung F_{G} ausgerichtete Bewegungsachse 41 auf, an die der Manipulatorarm 02 schwenkbar ist. Vorliegend ist am Schwenkgelenk 21 keine Drehwinkelbegrenzung vorgesehen. Jedoch ist es durchaus denkbar, zur Begrenzung des Drehwinkels am Schwenkgelenk 21 eine Drehwinkelbegrenzung vorzusehen. Das am Vertikalarm 18 angeordnete Haltemittel 05 ist über das Schwenkgelenk 51 um die Bewegungsachse 45 schwenkbar. Darüber hinaus ist es denkbar, dass das Haltemittel 05 zusätzliche Funktionen, wie Kippen, Heben, Verschieben oder dergleichen, an der Last 06 ausüben kann.

Die Hebevorrichtung 01 ist derart ausgelegt, dass sich ein Werker einerseits in unmittelbarer Nähe zur Last 06 bzw. den Haltemitteln 05 aufhalten kann und die Last 06 manuell manipulieren und mit Unterstützung der Positioniereinheiten 07, 08, 09, 10, 11 in die gewünschte Position verbringen kann. Hierzu kann der Werker eine Handkraft auf die Last 06 oder auf die Hebevorrichtung 01, insbesondere auf die Haltemittel 05 oder auf den Vertikalarm 18, aufbringen oder aber anhand des Steuermoduls 17 eine der Positioniereinheiten 07, 08, 09, 10, 11 ansteuern. In der Folge kann beispielsweise eine kombinierte Schwenkbewegung des Manipulatorarms 02 um das zugeordnete Schwenkgelenk 21 herbeigeführt werden, wodurch die Last 06 lateral oder in einer Schwenkbewegung parallel zum Boden geführt werden kann. Außerdem kann die Last 06 entlang der und/oder um die weiteren Bewegungsachsen 42, 43, 44, 45 der Mehrachskinematik 04 zur Positionierung der Last 06 bewegt werden.

Darüber hinaus weist der Manipulatorarm 02 an seinem dem Tragelement 16 zugewandten Ende ein zusätzliches Schwenkgelenk 25 mit einer horizontalen, als Schwenkachse ausgebildeten Bewegungsachse 46 zur Höhenverstellung der Last 06 auf. Hierzu ist der Manipulatorarm 02 gemäß gezeigtem Ausführungsbeispiel durch ein Paar von in Gewichtskraftrichtung F_{G} übereinander angeordneten, vertikal verschwenkbaren Parallelogrammarmen 22, 23 gebildet, wobei das Schwenkgelenk 25 als Doppelgelenk für die beiden Parallelogrammarme 22, 23 ausgebildet ist. Entsprechend kann auch am anderen Ende des Manipulatorarms 02, also dem dem Vertikalarm 18 zugewandten Ende des Manipulatorarms 02, ein solches Doppelgelenk vorgesehen sein. Dies erlaubt eine Höhenverstellung des Manipulatorarms 02 einschließlich der Last 06 mit beliebigen Zwischenpositionen. Aus der Kombination der horizontalen und vertikalen Verschwenkung sowie den Verfahrmöglichkeiten entlang der Bewegungsachsen 41, 42, 43, 44, 45 ergibt sich der Arbeitsraum 19, innerhalb dessen das Haltemittel 05 und die Last 06 bewegt werden können.

Zur Unterstützung des Werkers sind die Positioniereinheiten 07, 08, 09, 10, 11, die jeweils zumindest einen Positionieraktor aufweisen, den Bewegungsachsen 41, 42, 43, 44, 45, zugeordnet. Sofern die entsprechende Positioniereinheit 07, 08, 09, 10, 11 angesteuert wird, bewirkt diese eine Positionierkraft F_{P} auf die Mehrachskinematik 04, wodurch eine Bewegung der Last 06 um eine und/oder entlang einer der Bewegungsachsen 41, 42, 43, 44, 45 bewirkt wird. Beispielsweise ist die Positioniereinheit 08 der Bewegungsachse 41 zugeordnet und bewirkt eine Schwenkbewegung über das Schwenkgelenk 21 um die Bewegungsachse 41. Weiter ist im vorliegenden Ausführungsbeispiel die Positioniereinheit 10 der Schwenkachse 44 zugeordnet, wobei bei Ansteuerung der Positioniereinheit 10 diese ein Verschwenken des Vertikalarms 18 um die Bewegungsachse 44 bewirkt. Den als Verfahrachsen ausgebildeten Bewegungsachsen 42 und 43 sind die Positioniereinheiten 07 und 09 zugeordnet, deren Ansteuerung ein Verfahren des Manipulatorarms über die Mehrachskinematik 04 entlang der Bewegungsachsen 42 und 43 ermöglicht. Das Haltemittel 05 ist anhand der Positioniereinheit 11 um die Bewegungsachse 45 drehbar.

Die Positioniereinheiten 07, 08, 09, 10, 11 sind über das Steuermodul 17 durch den Werker direkt im Arbeitsraum 19 ansteuerbar oder aber von außerhalb des Arbeitsraums 19 mittels des Zentralrechners 100 ansteuerbar, da zwischen Zentralrechner 100 sowie der Regelungseinrichtung 14 und/oder dem Steuermodul 17 ein Datenaustausch D erfolgen kann. Um den Manipulatorarm 02 in Balance zu halten und die Positioniereinheiten 07, 08, 09, 10, 11 möglichst energieeffizient betreiben zu können, ist zumindest einer Bewegungsachse 41, 42, 43, 44, 45 eine Gewichtskompensationseinheit 12 zugeordnet, die ein Kolben-Zylinder-Modul als Gewichtskompensationsaktor aufweisen kann. Die Gewichtskompensationseinheit bewirkt eine auf den Manipulatorarm 02 wirkende Gegenkraft, die wiederum ein Gegenmoment, das dem Lastmoment entgegensteht, bewirkt. Die Gewichtskompensationseinheit 12 ist mittels der Regelungseinrichtung 14 derart regelbar, dass das durch die Gewichtskompensationseinheit 12 bewirkte Gegenmoment gleich dem durch die Gewichtskraft F_{G} der Last 06 bewirkten Lastmoment ist, wodurch der Manipulatorarm 02 im Gleichgewicht gehalten ist. Zum Rotieren bzw. Heben und Senken der Last 06 müssen die Positioniereinheiten 07, 08, 09, 10, 11 daher nur eine geringe Kraft aufbringen, wodurch die Positioniereinheiten 07, 08, 09, 10, 11 entsprechend schwach ausgelegt und energieeffizient betrieben werden können. Die Gewichtskompensationseinheit 12 ist gemäß vorliegendem Ausführungsbeispiel den Bewegungsachsen 41 und 44 zugeordnet, um die der Manipulatorarm 02 bzw. der Vertikalarm 18, ohne dass die Gewichtskraft F_{G} der Last 06 überwunden werden müsste, schwenkbar ist. Die Gewichtskompensationseinheit 12 sowie der Manipulatorarm 02 sind derart am Tragelement 16 angelenkt, dass der Manipulatorarm 02 und die Gewichtskompensationseinheit 12 zumindest jeweils eine vertikale Schwenkachse aufweisen, die parallel zueinander verlaufen. Das Kolben-Zylinder-Modul der Gewichtskompensationseinheit 12 kann in einer hier nicht näher gezeigten Führungseinrichtung quer zur Zylinderachse verschiebbar am Manipulatorarm 02 festgelegt sein.

In vorteilhafter Weise ist mittels der Regelungseinrichtung 14 die Gewichtskompensationseinheit 12 derart ansteuerbar, dass, wenn die zur Positionierung der Last 06 von einer der Positioniereinheiten 07, 08, 09, 10, 11 aufzubringende Positionierkraft F_{P} einen Schwellenwert überschreitet, sodass die Positioniereinheiten 07, 08, 09, 10, 11 nicht in gewünschter Art und Weise energieeffizient betrieben werden können, die Gewichtskompensationseinheit 12 die der Positioniereinheit 07, 08, 09, 10, 11 zugeordnete Bewegungsachse 41, 42, 43, 44, 45 entlastet. Die Ansteuerung der Gewichtskompensationseinheit 12 kann dabei beispielsweise in Abhängigkeit der Position der Last 06 im Arbeitsraum 19 erfolgen. Dabei ist es bekannt, dass bei Bewegung der Last 06 entlang einer Bewegungsbahn 15 das Lastmoment je nach Position der Last 06 im Arbeitsraum 19 unterschiedlich ist. Um diesem Umstand gerecht zu werden, kann die Gewichtskompensationseinheit 12 derart geregelt werden, dass die zur Positionierung der Last 06 aufzubringende Kraft unabhängig von der Gewichtskraft F_{G} und der Position der Last 06 im Arbeitsraum 19 konstant bleibt.

Die Positioniereinheiten 07, 08, 09, 10, 11 und die Gewichtskompensationseinheiten 12, 13 können mittels eines Steuerungsdatensatzes 101 angesteuert werden. Dieser kann direkt an der Hebevorrichtung 01 durch die Regelungseinrichtung 14 erstellt und vom Werker angepasst werden, oder entfernt von der Hebevorrichtung 01 von einem mit der Regelungseinrichtung 14 und/oder dem Steuermodul 17 im Datenaustausch D befindlichen Zentralrechner 100. Es ist zudem denkbar, dass im Zentralrechner die Planung der Bewegungsbahn 15 erfolgt und ein entsprechender Steuerungsdatensatz 101 umfassend zumindest die Bewegungsbahn 15 an die Regelungseinrichtung 14 und/oder das Steuermodul 17 ausgegeben wird, sodass die Positionierung der Last 06 zumindest halbautomatisiert oder vollautomatisiert erfolgen kann. Weiter kann die Hebevorrichtung 01 hier nicht gezeigte Sensoriken, beispielsweise eine Positionssensorik, eine Geschwindigkeitssensorik, eine Beschleunigungssensorik, eine Zeitsensorik, eine Wegsensorik und eine Gewichtssensorik, aufweisen, die kontinuierlich oder in regelmäßigen Abständen Messwerte erfassen, welche in einer Datenbank 102 gespeichert werden. Dabei kann es vorgesehen sein, dass Steuerungsdatensätze 101, beispielsweise historische Steuerungsdatensätze, die in der Vergangenheit zur Positionierung einer Last 06 verwendet wurden, und Messwerte in der Datenbank 102 verknüpft gespeichert werden, und der Zentralrechner 100 anhand der gespeicherten Messwerte und Steuerungsdatensätze 101 ein statistisches Modell erstellt, mittels dessen ein neuer Steuerungsdatensatz 101 durch Inferenz mit dem statistischen Modell ermittelt werden kann. Somit kann eine fortlaufende Optimierung der Positionierung einer Last 06 durch maschinelles Lernen ermöglicht werden und der Werker weitestgehend entlastet werden.

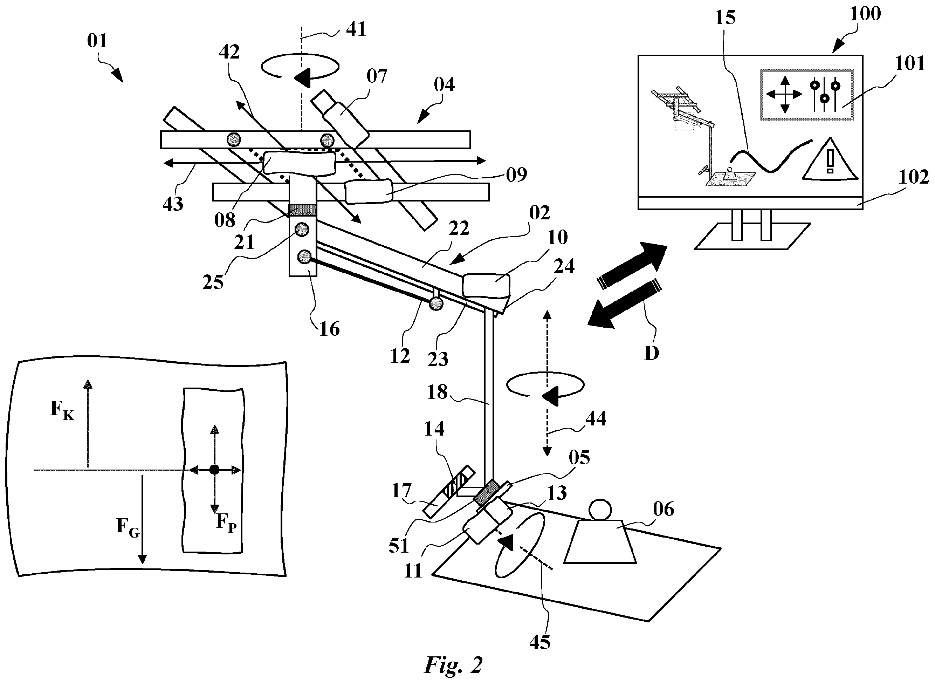

Die in Fig. 2 gezeigte Hebevorrichtung 01 entspricht bis auf die Anordnung der Gewichtskompensationseinheiten 12, 13 der Hebevorrichtung nach Figur 1, weshalb zur Vermeidung von Wiederholungen auf die diesbezügliche Beschreibung verwiesen wird. Es ist zu erkennen, dass gemäß der mit Fig.2 gezeigten Ausführungsform die Hebevorrichtung zwei Gewichtskompensationseinheiten 12, 13 aufweist. Jede der Gewichtskompensationseinheiten 12, 13 ist dabei zumindest einer der Bewegungsachsen 41, 42, 43, 44, 45 zur Entlastung der Positioniereinheiten 07, 08, 09, 10, 11 zugeordnet. Die Gewichtskompensationseinheit 12 ist zumindest den Bewegungsachsen 41 und 44 zugeordnet, und die Gewichtskompensationseinheit 13 ist zumindest der Bewegungsachse 45 zugeordnet. Im Rahmen der Erfindung kann somit vorteilhafterweise die Gewichtskraft der Last 06 entlang mehrerer Bewegungsachsen 41, 42, 43, 44, 45 mit einer einzelnen Gewichtskompensationseinheit 12 kompensiert werden und/oder mit mehreren Gewichtskompensationseinheiten 12, 13, die zumindest einer Bewegungsachse 41, 42, 43, 44, 45 zugeordnet sind, kompensiert werden.

### Bezugszeichenliste

- 01: Hebevorrichtung
- 02: Manipulatorarm
21, 25 Schwenkgelenk
22, 23 Parallelogrammarme
24 freies Ende Manipulatorarm
- 03 04: Mehrachskinematik
41, 42, 43, 44, 45 Bewegungsachse
- 05: Haltemittel
51 Schwenkgelenk
- 06: Last
- 07, 08, 09, 10, 11: Positioniereinheit
- 12, 13: Gewichtskompensationseinheit
- 14: Regelungseinrichtung
- 15: Bewegungsbahn
- 16: Tragelement
- 17: Steuermodul
- 18: Vertikalarm
- 19: Arbeitsraum
- 100: Zentralrechner bspw. Computer
- 101: Steuerungsdatensatz
- 102: Datenbank
- D: Datenaustausch

## Patentansprüche

1. Hebevorrichtung (01) zum Manipulieren einer Last (06), umfassend eine Mehrachskinematik (04), an der mindestens ein Manipulatorarm (02) gelagert ist, wobei der Manipulatorarm (02) um und/oder entlang mehrerer Bewegungsachsen (41, 42, 43, 44, 45) bewegbar ist und ein Haltemittel (05) für die Last (06) aufweist,
**dadurch gekennzeichnet,**
**dass** zumindest einer der Bewegungsachsen (41, 42, 43, 44, 45) eine auf die Mehrachskinematik (04) einwirkende Positioniereinheit (07, 08, 09, 10, 11) zur Bewegung des Manipulatorarms (02) sowie eine Gewichtskompensationseinheit (12, 13) zur Kompensation der Gewichtskraft (F_{G}) der Last (06) zugeordnet ist.

2. Hebevorrichtung nach Anspruch 1,
**dadurch gekennzeichnet,**
**dass** die Gewichtskompensationseinheit (12, 13)und/oder die Positioniereinheit (07, 08, 09, 10, 11) elektrisch und/oder pneumatisch antreibbar ist, wobei bevorzugt der elektrische und/oder pneumatische Antrieb der Gewichtskompensationseinheit (12, 13) und/oder der Positioniereinheit (07, 08, 09, 10, 11) derart ausgebildet ist, dass der Antrieb den Anforderungen der kollaborativen Robotik genügt.

3. Hebevorrichtung nach Anspruch 1 oder 2,
**dadurch gekennzeichnet,**
**dass** eine Regelungseinrichtung (14) umfasst ist, die dazu ausgebildet ist, die Bewegung des Manipulatorarms (02) in Abhängigkeit der Gewichtskraft (F_{G}) der Last (06) und/oder der Position der Last (06) und/oder der Bewegungsbahn (15) des Manipulatorarms (02) zu regeln.

4. Hebevorrichtung nach einem der Ansprüche 1 bis 3,
**dadurch gekennzeichnet,**
**dass** die Regelungseinrichtung (14) dazu ausgebildet ist, die Gewichtskraft (F_{G}) der Last (06) dynamisch zu kompensieren.

5. Hebevorrichtung nach einem der Ansprüche 1 bis 4,
**dadurch gekennzeichnet,**
**dass** eine Positionssensorik, eine Geschwindigkeitssensorik, eine Beschleunigungssensorik, eine Zeitsensorik, eine Wegsensorik und/oder eine Gewichtssensorik umfasst ist und/oder die Gewichtskompensationseinheit (12, 13) eine Absturzsicherung aufweist.

6. Hebevorrichtung nach einem der Ansprüche 1 bis 5,
**dadurch gekennzeichnet,**
**dass** die Mehrachskinematik (04) ein dem Manipulatorarm (02) zugeordnetes Schwenkgelenk (21) mit einer vertikalen Bewegungsachse (41) aufweist, um die der Manipulatorarm (02) schwenkbar ist, wobei der Manipulatorarm (02) mittels des zugeordneten Schwenkgelenks (21) ortsfest, insbesondere an einem Tragelement (16), gelagert ist.

7. Hebevorrichtung nach einem der Ansprüche 1 bis 6,
**dadurch gekennzeichnet,**
**dass** der Manipulatorarm (02) durch in Gewichtskraftrichtung (F_{G}) übereinander angeordnete, vertikal verschwenkbare Parallelogrammarme (22, 23) gebildet ist und/oder im Bereich des Haltemittels (05) für die Last (06) ein durch einen Benutzer betätigbares Steuermodul (17) angeordnet ist.

8. Hebevorrichtung nach einem der Ansprüche 1 bis 7,
**dadurch gekennzeichnet,**
**dass** eine Führungseinrichtung umfasst ist, die eine Verschiebung der Gewichtskompensationseinheit (12), insbesondere eines Kolben-Zylinder-Moduls der Gewichtskompensationseinheit (12), quer zu einer Längsachse der Gewichtskompensationseinheit (12), insbesondere quer zu einer Zylinderachse des Kolben-Zylinder-Moduls, erlaubt.

9. Hebevorrichtung nach einem der Ansprüche 1 bis 8,
**dadurch gekennzeichnet,**
**dass** das Haltemittel (05) für die Last (06) mittels eines Vertikalarms (18) und eines zusätzlichen Schwenkgelenks (51) mit als Schwenkachse ausgebildeter Bewegungsachse (45) an einem freien Ende (24) des Manipulatorarms (02) befestigt ist, wobei das Haltemittel (05) frei, insbesondere mit einer Drehwinkelbegrenzung, um das zusätzliche Schwenkgelenk (51) schwenkbar ist.

10. Verfahren zum Manipulieren einer Last (06) mittels mindestens einer Hebevorrichtung (01), die bevorzugt nach einem der vorangehenden Ansprüche ausgebildet ist, umfassend die folgenden Schritte:
- Festlegen der Last (06) an einem Haltemittel (05),
- Heben und/oder Halten der Last (06) zumindest mittels einer Gewichtskompensationseinheit (12, 13), und
- Positionieren der Last (06) mittels Handkraft und/oder einer Positioniereinheit (07, 08, 09, 10, 11),
wobei das Positionieren der Last (06) um zumindest eine Bewegungsachse (41, 42, 43, 44, 45) und/oder entlang zumindest einer Bewegungsachse (41, 42, 43, 44, 45) durch eine der zumindest einen Bewegungsachse (41, 42, 43, 44, 45) zugeordnete Positioniereinheit (07, 08, 09, 10, 11) und eine der zumindest einen Bewegungsachse (41, 42, 43, 44, 45) zugeordnete Gewichtskompensationseinheit (12, 13) unterstützt wird.

11. Verfahren nach Anspruch 10,
wobei die Gewichtskompensationseinheit (12, 13) derart geregelt wird, dass zum Positionieren der Last (06) mittels der Positioniereinheit (07, 08, 09, 10, 11) relativ geringe Antriebskräfte, die insbesondere einen Personenschaden minimieren und/oder ausschließen, aufgebracht werden, und/oder die Gewichtskompensationseinheit (12, 13), insbesondere in Abhängigkeit der Position der Last (06), derart geregelt wird, dass die zur Positionierung der Last (06) aufzubringende Kraft unabhängig von der Gewichtskraft (F_{G}) und der Position der Last (06) konstant bleibt.

12. Verfahren nach einem der Ansprüche 10 oder 11,
wobei bei bekannter Gewichtskraft (F_{G}) der Last (06) das Heben der Last (06) mit einer höheren Geschwindigkeit als das Positionieren der Last (06) erfolgt.

13. Verfahren nach einem der Ansprüche 10 bis 12,
wobei die Gewichtskraft (F_{G}) der Last ermittelt wird und ein Steuerungsdatensatz (101) zur Steuerung der Positioniereinheit und/oder der Gewichtskompensationseinheit in Abhängigkeit der Gewichtskraft (F_{G}) der Last erstellt wird.

14. Verfahren nach einem der Ansprüche 10 bis 13,
wobei Messwerte einer Positionssensorik, einer Geschwindigkeitssensorik, einer Beschleunigungssensorik, einer Zeitsensorik, einer Wegsensorik und/oder einer Gewichtssensorik erfasst werden, und wobei die Messwerte in einer Datenbank (102) gespeichert werden und/oder ein Steuerungsdatensatz (101) in Abhängigkeit der Messwerte erstellt wird.

15. Verfahren nach Anspruch 14,
wobei Steuerungsdatensätze (101) und Messwerte in der Datenbank (102) verknüpft gespeichert werden, und wobei ein statistisches Modell anhand der gespeicherten Messwerte und Steuerungsdatensätze (101) erstellt wird, und wobei ein neuer Steuerungsdatensatz (101) durch Inferenz mit dem statistischen Modell ermittelt wird.
